Europäisches Patentamt

(19)　European Patent Office

Office européen des brevets

(11)　**EP 0 831 476 A1**

(12)　**EUROPEAN PATENT APPLICATION**

(43) Date of publication:
**25.03.1998 Bulletin 1998/13**

(51) Int. Cl.$^6$: **G11B 20/10**, G11B 20/22,
G11B 15/467, G11B 27/11,
G11B 27/30

(21) Application number: **96306932.3**

(22) Date of filing: **24.09.1996**

(84) Designated Contracting States:
**DE FR GB**

(71) Applicant:
**Hewlett-Packard Company
Palo Alto, California 94304 (US)**

(72) Inventor:
**Langford, Stephen,
Lanesend Cottage
Bristol BS12 1MW (GB)**

(74) Representative:
**Kilgannon, Denise Mary et al
Hewlett-Packard Ltd,
IP Section,
Building 2,
Filton Road,
Stoke Gifford
Bristol BS12 6QZ (GB)**

(54)　**Methods and apparatus for controlling tape drive read circuitry operation**

(57)　During retrieval of data from tape (10) in a helical scan tape drive mechanism with a rotary head drum (12), movement of tape past the drum by a capstan (15) is controlled to keep the tracks (20,21) recorded on the tape in alignment with paths followed by the heads. A time interval (Int) is measured between occurrence of a drum position pulse generated at a specific angular position of the drum, and detection of reference signals (28a,28b) included in the tracks (such as specific portions, with known bit patterns, of the data in the tracks).

The capstan is operated to keep this interval equal to a set reference value, which is recalibrated for example when a new tape is loaded or at a transition between data recordings made at different times. In addition, the timing of window pulses for coordinating operation of read circuitry in the drive is adjusted in accordance with the departure of the recalibrated reference value from a nominal value.

Fig.11

EP 0 831 476 A1

## Description

### Technical Field

This invention relates to methods and apparatus for controlling operation of read circuitry in a tape drive (for example a helical scan tape drive), and particularly to methods and apparatus for controlling timing of operation of such read circuitry.

### Background Art

It is already known to provide reliable storage and retrieval of large volumes of digital data, such as computer data, in particular by means of the DDS (Digital Data Storage) format defined in ISO/IEC Standard 10777:1991 E.

In the DDS system an elongate recording media comprising tape coated with a magnetic medium is moved by a motor-driven capstan along a path wrapped partially around a transducer comprising a rotating drum carrying one or more electromagnetic heads. The plane of rotation of the drum is disposed at an angle to the plane of movement of the tape, so that each head traverses the tape along successive tracks extending across the width of the tape at an angle to its centreline.

Typically the precise location of each track is determined during recording of data on the tape by the position relative to the tape of write heads on the drum. To ensure optimum retrieval of data from the tape, it is desirable for read heads on the drum to follow paths across the tape which are at essentially identical positions to those followed by the write heads during data recording. This in turn requires control during data retrieval of relative motion between the tape and the drum, by controlling rotation of the drum and/or controlling movement of the tape by the capstan.

Variation in the position of the write heads relative to the tape during recording also produces variation in the exact location of the actual track along its path across the tape, and thus in the distances along this path between the edges of the tape and each end of the track.

During data retrieval each electromagnetic head on the drum spends some interval of each revolution of the drum out of contact with the data-carrying portions of the tape tracks, and thus unable to read data. In this interval, however, the head may still produce output signals, for example because of noise, or cross-talk from other parts of the circuitry. These output signals can appear to the processing circuitry for data retrieval to be genuine data signals, and attempts by the processing circuitry to handle the signals accordingly can interfere with processing of genuine data signals. In order to avoid this problem, the data retrieval circuitry is typically supplied with one or more 'read window' signals which enable operation of the circuitry when a read window signal is active and disable such operation at all other times. The active period of a read window signal is arranged to coincide with the interval in each revolution of the drum when a read head is traversing the data-carrying portions of a tape track.

However, owing to the variation in the location of a track along its path across the tape, some tolerance has to be allowed in the timing of the read window signal, so that it both starts before the earliest time data can be encountered by a head traversing the tape and ends after the latest time the termination of the data occurs. This tolerance results in the tape drive's still being susceptible to some interference from spurious signals. In addition, if a track is seriously mis-positioned (e.g. with one end too close to an edge of the tape) part of the corresponding output signal from the read head will occur before the read window signal has become active or after it has become inactive, so the relevant data will not be retrieved.

European patent application no. 0 671 735 describes a method and apparatus for controlling motion of recording media, such as DDS tape, relative to a rotating transducer, such as a head drum. In that system a time interval is measured between occurrence of a drum position signal generated at a specific angular position of the drum, and detection of reference signals included in the tracks (such as specific portions, with known bit patterns, of the data in the tracks). The capstan is operated to keep this interval equal to a set reference value, which is recalibrated for example when a new tape is loaded or at a transition between data recordings made at different times.

It is an object of this invention to provide a method and apparatus for controlling timing of operation of read circuitry for use in, for example, a mechanism (such as a DDS drive) in which the delay between occurrence of a drum position signal and detection of a track reference signal is compared with a reference value to control relative movement of the tape and the transducer, and the reference value is recalibrated from time to time.

### Disclosure of Invention

According to one aspect of this invention there is provided a method for controlling timing of operation of read circuitry in a tape drive, the drive having a rotating transducer for retrieving data recorded in tracks extending across data-carrying media, and each said track including at least one reference signal, the method comprising the steps of: generating a position signal at a predetermined angular position of said transducer in each revolution thereof; determining a reference value for a time interval between occurrence of said position signal and detection of said reference signal; and controlling timing of operation of the read circuitry in accordance with said reference value.

According to another aspect of this invention there is provided apparatus for controlling timing of operation of read circuitry in a tape drive, the drive having a rotating transducer for retrieving data recorded in tracks extending across data-carrying media, and each said track including at least one reference signal, comprising: means for generating a position signal at a predetermined angular position of said transducer in each revolution thereof; means for determining a reference value for a time interval between occurrence of said position signal and detection of said reference signal; and means for controlling timing of operation of the read circuitry in accordance with said reference value.

Brief Description of Drawings

Methods and apparatus in accordance with this invention for controlling timing of operation of read circuitry in a DDS data storage mechanism will now be described, by way of example, with reference to the accompanying drawings, in which:

Figure 1    is a diagram illustrating the main physical components of a tape deck employing helical scan recording;

Figure 2    is a diagrammatic representation of two data tracks recorded on tape using helical scan recording;

Figure 3    is a diagrammatic representation of the format of a main data area of a data track;

Figure 4    is a block diagram of the main components of the data storage apparatus;

Figure 5    illustrates the principle of a track following technique used in the apparatus of Figure 4;

Figure 6    is a block schematic diagram of track following circuits forming part of the apparatus of Figure 4;

Figure 7    is a flow chart of the operation of a reference signal detector in the track following circuits of Figure 6;

Figure 8    is a flow chart of the normal operation of an automatic track following (ATF) circuit in the apparatus of Figure 4;

Figure 9    is a schematic timing diagram illustrating the operation of the track following circuits during a calibration phase;

Figure 10   is a flow chart of the operation of the ATF circuit during the calibration phase; and

Figure 11   is a schematic waveform diagram showing read window pulses for controlling timing of operation of read circuitry.

Best Mode for Carrying Out the Invention, & Industrial Applicability

The data storage apparatus now to be described utilizes a helical scan technique for storing data in oblique tracks on a recording tape in a format similar to that used for the storage of PCM audio data according to the DAT Conference Standard (June 1987, Electronic Industries Association of Japan, Tokyo, Japan). The present apparatus is, however, adapted for storing computer data rather than digitized audio information.

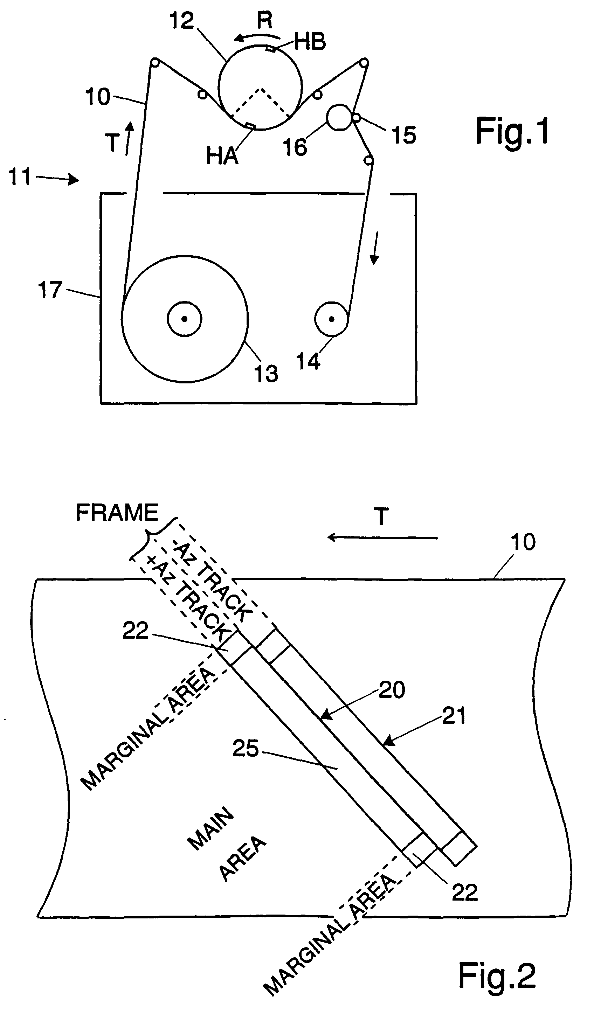

Figure 1 shows the basic layout of a helical-scan tape deck 11 in which tape 10 from a tape cartridge 17 passes at a predetermined angle across a rotary head drum 12 with a wrap angle of approximately 90°. In operation, the tape 10 is moved in the direction indicated by arrow T from a supply reel 13 to a take-up reel 14 by rotation of a capstan 15 against which the tape is pressed by a pinch roller 16; at the same time, the head drum is rotated in the sense indicated by arrow R. The head drum 12 houses two read/write heads HA, HB angularly spaced by 180°. In known manner, these heads HA, HB are arranged to write overlapping oblique tracks 20, 21 respectively across the tape 10 as shown in Figure 2. The track written by head HA has a positive azimuth while that written by head HB has a negative azimuth. Each pair of positive and negative azimuth tracks, 20, 21 constitutes a frame.

The basic format of each track as arranged to be written by the present apparatus is illustrated in Figure 2. Each track comprises two marginal areas 22 and a main area 25. The main area 25 is used to store data provided to the apparatus (main data), together with certain auxiliary information. The items of auxiliary information are known as sub codes and relate, for example, to the logical organization of the main data, its mapping onto the tape, certain recording parameters (such as format identity, tape parameters etc.), and tape usage history. The main area 25 also includes synchronization bytes ('sync bytes') which enable the boundaries between successive data bytes stored on the tape to be identified, and which are also used to generate timing signals for controlling tape movement so that the heads HA, HB follow the tracks accurately, by measuring the time interval between signals indicative of the drum position and reference signals including the sync bytes, in a manner similar to that described in the above-mentioned US patent No. 4 954 902.

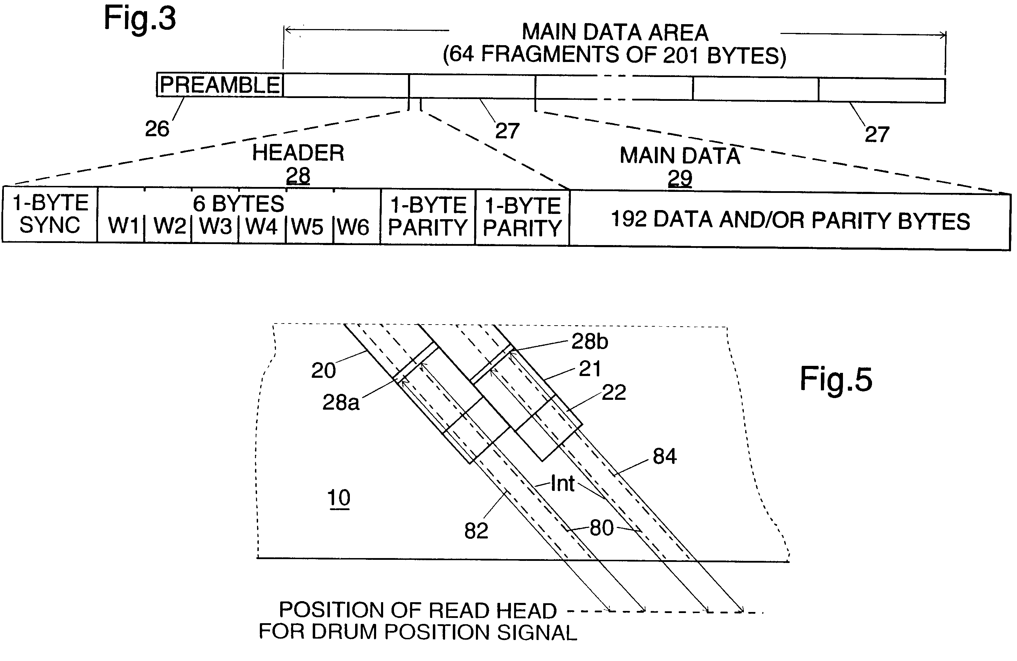

The data format of the main area 25 of a track is illustrated in Figure 3. The main area is composed of a pre-amble block 26, followed by sixty-four sections or 'fragments' 27 each two hundred and one bytes long. The block 26 is a pre-amble which contains timing data patterns to facilitate timing synchronization on playback. The fragments 27 make up the 'Main Data Area'. Each fragment 27 in the Main Data Area comprises a nine-byte 'Header' region 28 and a one hundred and ninety-two byte 'Main Data' region 29, the compositions of which are shown in the lower part of Figure 3.

The Header region 28 is composed of a sync byte as mentioned above, six information-containing bytes W1 to W6, and two parity bytes. The first information byte W1 contains a six-bit Fragment ID which identifies the fragment within the main area 25. Byte W2 contains an Area ID sub code in its four most significant bits, and a frame number in its four least significant bits which is incremented mod 16 between consecutive frames. Bytes W3 to W6 contain sub codes providing information about the contents of the track and the history of usage of the tape. The parity bytes comprise a sixteen-bit cyclic redundancy check (CRC) code derived from the contents of the remainder of the Header region.

The Main Data region 29 of each fragment 27 is composed of one hundred and ninety-two bytes (comprising six successive thirty-two byte blocks) generally constituted by main data and/or main-data parity. However, it is also possible to store sub codes in the Main Data region if desired.

In summary, main data are stored in the Main Data regions 29 of the Main Data Area fragments 27 of each track, while sub codes can be stored both in the Header and Main Data regions 28, 29 of Main Data Area fragments 27.

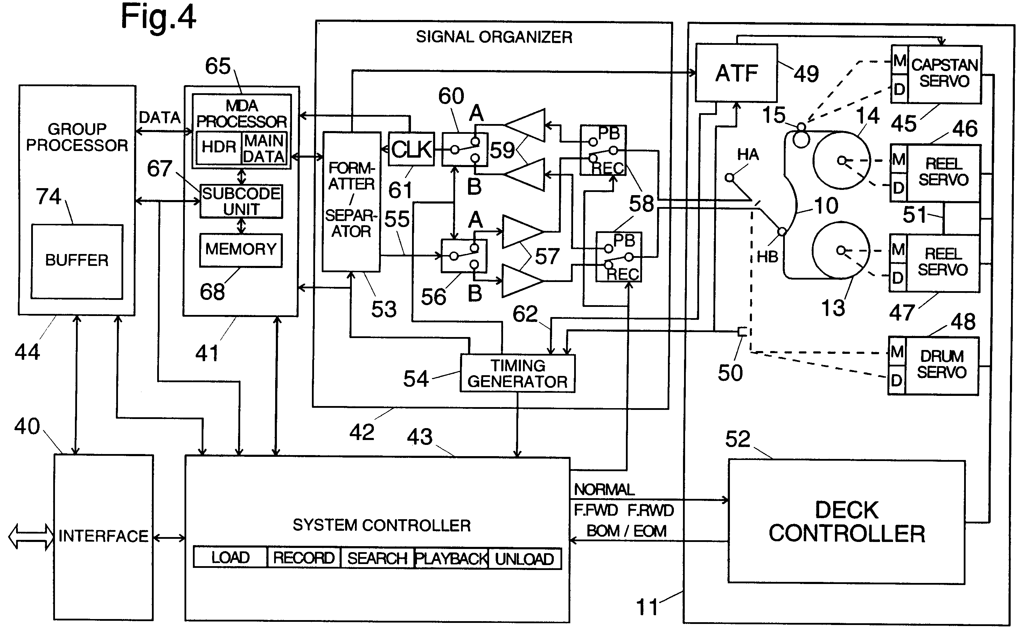

Figure 4 is a block diagram of the data storage apparatus in its entirety including the tape deck 11 already described in part with reference to Figure 1. In addition to the tape deck, the apparatus includes an interface unit 40 for interfacing the apparatus with a computer (not shown); a group processor 44 and a frame data processor 41 for processing main data and sub codes into and out of a Main Data Area fragment 27; a signal organizer 42 for composing/decomposing the signals for writing/reading a track and for appropriately switching the two heads HA, HB; and a system controller 43 for controlling the operation of the apparatus in response to commands received from a computer via the interface unit 40. Each of the main component units of the apparatus will be further described below.

The data storage apparatus is arranged to respond to commands from a computer to load/unload a tape, to store a data record and other logical segmentation marks, to search for a selected record using the segmentation marks, and to read back the next record.

The interface unit 40 is arranged to receive the commands from the computer and to manage the transfer of data records and logical data segmentation marks between the apparatus and computer. Upon receiving a command from the computer, the unit 40 passes it on to the system controller 43 which, in due course will send a response back to the computer via the unit 40 indicating compliance or otherwise with the original command. Once the apparatus has been set up by the system controller 43 in response to a command from the computer to store or read data, then the interface unit 40 will also control the passage of records and segmentation marks between the computer and the group processor 44.

During data storage the group processor 44 is arranged to segment the main data provided to it in the form of data records into data packages each containing an amount of data corresponding to a fixed number (group) of frames (for example, twenty two). This segmentation is effected without regard to the logical organization of the data (that is, how it is divided into records). Information regarding the logical segmentation of the data (record divisions, file marks) is stored in an index which is generated by the processor 44 and which forms the last portion of data making up a group. The processor 44 also generates certain sub codes whose contents are group-dependent or concern the logical segmentation of data. To facilitate these tasks and the transfer of data to and from the processor 44, the latter is provided with a large buffer 74 which is arranged to hold several (for example, three) group's worth of data.

Once a group, including its index, has been assembled, it is transferred a frame at a time to the frame data processor 41. Conceptually there is no need for the frame data processor 41 to be aware of the grouping of frames as the group processor 44 could simply pass it a frame's worth of main data at a time together with the appropriate sub codes. However, in order to speed the transfer of data between the processors 44 and 41, it is advantageous for the frame data processor 41 to be managed in terms of groups for receiving data from the processor 44 - in other words, during recording, the processor 41 is told by the group processor 44 when a group is ready for processing after which the processor 41 accesses the frames of the group autonomously from the buffer 74.

When data are being read from tape, the group processor 44 is arranged to receive main data on a frame-by-frame basis, the data being written into the buffer 74 in such a manner as to build up a group. The group processor 44 can then access the group index to recover information on the logical organization (record structure, file marks) of the main data in the group. Using this information the group processor can pass the requested record or segmentation mark to the computer via the interface unit 40.

To facilitate the assembly of frame data back into a group's worth of data, each frame can be tagged with an in-group sequence number when the frame is written to tape. This in-group number can be provided as a sub code that, for example, is included at the head of the Main Data region of the first fragment in the Main Data Area of each track of a frame. The sub code is used on playback to determine where the related frame data are placed in the buffer 74 when passed to the group processor 44.

The frame data processor 41 functionally comprises a Main-Data-Area (MDA) processor 65 and a sub code unit 67 with an associated electronic memory 68 for tape usage data (in practice, these functional elements may be constituted by a single microprocessor running appropriate processes under program control).

The sub code unit 67 is arranged to provide sub codes to the processor 65 as required during recording and to receive and distribute sub codes from the processor 65 during playback. Dependent on their information contents, sub codes may be generated/required by the group processor 44 or the system controller; the Area ID sub code is, for example, determined by/used by the controller 43. In the case of non-varying sub codes such as certain recording parameters, the sub codes may be permanently stored in the unit 67. Furthermore, frame-dependent sub codes such as absolute frame number, may conveniently be generated by the sub code unit 67 itself.

With regard to the tape usage sub codes, these are read off from the system area of a tape upon first loading and stored by the unit 67 in the memory 68. During a tape usage session, the tape usage data held in the memory 68 are updated by the unit 67 as appropriate on the basis of inputs received from the processors 44, 65 and the controller 43; thus if a record is kept of the number of main data frames read/written (either directly or in terms of the number of groups read and written), then these data must be continually updated by the unit 67 as a result of inputs from the processor 65 (or possibly the processor 44 if groups are counted). At the end of a tape usage session, the contents of the memory 68 are stored to tape within a log area of the tape system area, the latter being rewritten at the end of each session of usage. The multiple storage of the tape usage sub codes within the log area together with associated parity information, ensures a very high probability that the tape usage sub codes can be read back from the tape even in the presence of tape defects or other similar degradations.

The MDA processor 65 is arranged to process a frame's worth of main data at a time together with the associated sub codes in the fragment Header regions. Thus during recording, the processor 65 receives a frame's worth of main data from the group processor 44 together with sub codes from the unit 67. On receiving the main data the processor 65 interleaves the data, and calculates error correcting codes and parity values, before assembling the resultant data and sub codes to output the Main-Data-Area fragments for the two tracks making up a frame. Before assembling the main data with the sub codes, scrambling (randomizing) of the data may be effected to ensure a consistent RF envelope independent of the data contents of a track signal.

During playback, the processor 65 effects a reverse process on the two sets of Main-Data-Area fragments associated with the same frame. Unscrambled, error-corrected and de-interleaved main data are passed to the group processor 44 and sub codes are separated off and distributed by the unit 67 to the processor 44 or system controller 43 as required.

The signal organizer 42 comprises a formatter/separator unit 53 which during recording (data writing) is arranged to assemble Main-Data-Area fragments provided by the frame data processor 41, to form the signal including sync bytes to be recorded on each successive track. The necessary pre-amble patterns are also inserted into the track signals where necessary by the unit 53. Timing signals for coordinating the operation of the unit 53 with rotation of the heads HA, HB are provided by a timing generator 54 fed with drum position signals output by a pulse generator 50 responsive to head drum rotation and located in the tape deck 11. The track signals output on line 55 from the unit 53 are passed alternately to head HA and head HB via a head switch 56, respective head drive amplifiers 57, and record/playback switches 58 set to their record positions by the system controller 43. The head switch 56 is operated by appropriate timed signals from the timing generator 54.

During playback (data reading) the track signals alternately generated by the heads HA and HB are fed via the record/playback switches 58 (now set by the system controller 43 to their playback positions), respective read amplifiers 59, a second head switch 60, and a clock recovery circuit 61, to the input of the formatter/separator unit 53. The operation of the head switch 60 is controlled in the same manner as that of the head switch 56, in response to timing signals from the timing generator 54. This timing generator also provides 'read window' pulses to the formatter/separator unit 53 and the processor 41, so that operation of their circuitry during playback is enabled only while one or other of the heads is actually traversing the data-carrying section of the tape. Disabling the circuitry at other times during playback reduces the risk of, for example, noise, or cross-talk from another head (during read-after-write operation) being mis-interpreted as actual data.

In the case of playback the unit 53 serves to generate signals indicating the timing of the Header regions (incorporating the sync bytes) of selected fragments in the track signals, to supply the timing signals to an ATF circuit 49 in the tape deck 11, and to pass the Main-Data-Area fragments to the frame data processor 41. Clock signals are also passed to the processor 41 from the clock recovery circuit 61.

The tape deck 11 has four servos, namely a capstan servo 45 for controlling the rotation of the capstan 15, first and second reel servos 46, 47 for controlling rotation of the reels 13, 14 respectively, and a drum servo 48 for controlling the rotation of the head drum 12 (Figure 1). Each servo includes a motor M and a rotation detector D both coupled to the element controlled by the servo. Associated with the reel servos 46, 47 is a detector 51 for sensing the ends of the tape: beginning-of-media (BOM) and end-of-media (EOM); this detector 51 may be based for example on motor current sensing, as the motor current of whichever reel is being driven to wind in tape (dependent on the direction of tape travel) will increase significantly upon stalling of the motor at BOM/EOM.

The operation of the tape deck 11 is controlled by a deck controller 52 which is connected to the servos 45 to 48 and to the BOM/EOM detector 51. The controller 52 is operable to cause the servos to advance the tape, (either at normal speed or at high speed) through any required distance. This control is effected either by energizing the servos for a time interval appropriate to the tape speed set, or by feedback of tape displacement information from one or more of the rotation detectors D associated with the servos.

The deck controller 52 is itself governed by control signals issued by the system controller 43. The deck controller 52 is arranged to output to the controller 43 signals indicative of BOM and EOM being reached.

The system controller 43 serves both to manage high-level interaction between the computer and storage apparatus and to coordinate the functioning of the other units of the storage apparatus in carrying out the basic operations of Load-Record-Search-Playback-Unload requested by the computer. In this latter respect, the controller 43 serves to coordinate the operation of the deck 11 with the data processing portion of the apparatus.

In controlling the tape deck 11, the system controller can request the deck controller 52 to move the tape at the normal read/write speed (Normal) or to move the tape forwards or backwards at high speed, that is, Fast Forward (F.FWD) or Fast Rewind (F.RWD).

The ATF circuit 49 is operative during playback to compare the timing of the selected Header regions in the track signal read from tape, with the drum position signal from the pulse generator 50, to provide an adjustment signal to the capstan servo 45 such that the heads HA, HB are properly aligned with the tracks recorded on the tape. Thus in this embodiment reference signals for use in controlling track following by the heads HA and HB are constituted by these selected Header regions.

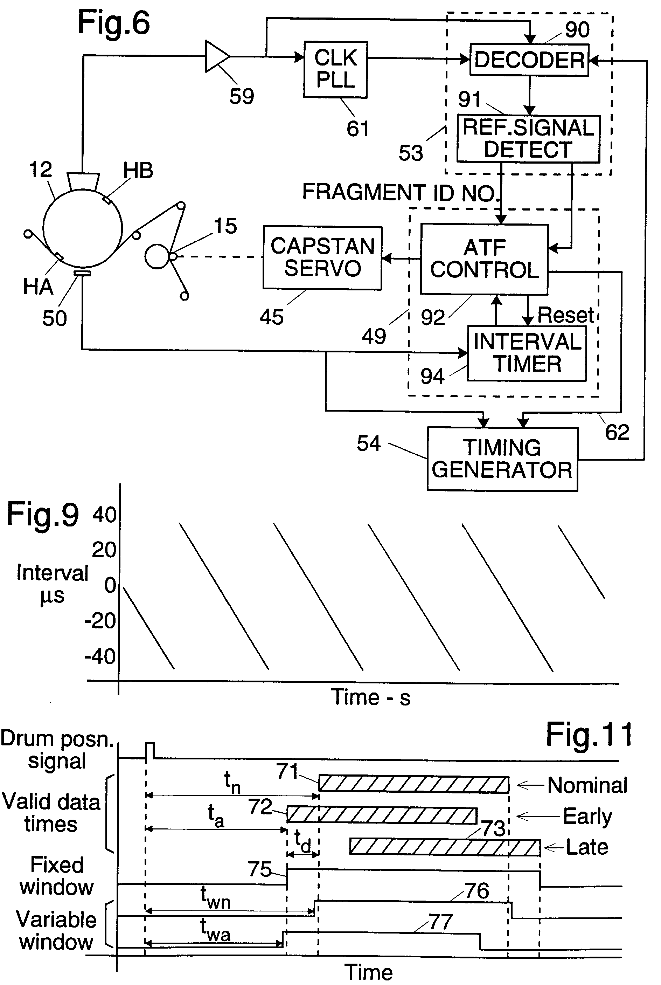

Figure 5 illustrates the principle of operation of the tracking control. Referring to Figure 5, Header regions 28a and 28b are shown of fragments near the ends of two adjacent tracks 20 and 21. The ideal paths for the relevant head along these tracks are shown by the dot-dash lines 80. The ATF circuit measures the time interval Int between the occurrence of the drum position signal, which is generated as one of the heads approaches the tape, and the detection of a reference signal comprising the Header region 28a or 28b. When the heads are correctly following the paths 80, the time Int will match a preset reference value. If the head reaches the edge of the tape before the tape has advanced enough to line a track up with the head, as shown by the dot-dash line 82 on track 20, the measured time interval Int will be less than this reference value; on the other hand, if the tape has advanced too far, as shown by the dot-dash line 84 on the track 21, the interval Int will be greater than the reference value. By respectively speeding up or slowing down the capstan servo 45, the ATF circuit 49 can correct these tracking errors and keep the heads on the ideal paths 80.

In practice greater reliability can be obtained by measuring the time intervals between the drum position signal and the detection of more than one reference signal (Header region 28). Thus, for example, in the embodiment described below, this time interval is measured for both the first and last Header regions in each track (i.e. in fragments 0 and 63), and the mean value of these two measurements is used to control the tape movement.

The track following circuits including the ATF circuit 49 are shown in more detail in Figure 6. Referring to Figure 6 (from which the head and record/playback switches have been omitted for clarity) and as described above, the track signals from the heads HA and HB are fed via the amplifier stage 59 to the clock recovery circuit 61 and to the formatter/separator unit 53. The circuit 61, which incorporates a phase-locked loop, provides the unit 53 with a clock signal, which is received together with the track signals by a decoder 90. Decoded signals are in turn supplied to a reference signal detector 91. As described below, this detector identifies fragment Headers containing a fragment ID of 0 and 63 in each track, and supplies a pulse at the time of detection of these reference signals, together with the value of the fragment ID, to an ATF controller 92 located in the ATF circuit 49. An interval timer 94 in the ATF circuit 49 receives the drum position signal from the pulse generator 50 associated with the drum 12, and measures time intervals starting with each position signal until it is reset by the ATF controller 92. This controller is coupled to the interval timer to latch its time measurement upon receipt of each reference signal detection pulse, and supplies a control signal to the capstan servo 45 in dependence upon comparison of the latched time measurements with the reference value. The controller 92 also supplies a signal to the timing generator 54, indicative of the difference between this reference value and a nominal reference value, so that the timing generator can provide an appropriately timed read window pulse to, for example, the formatter/separator unit 53, as described below.

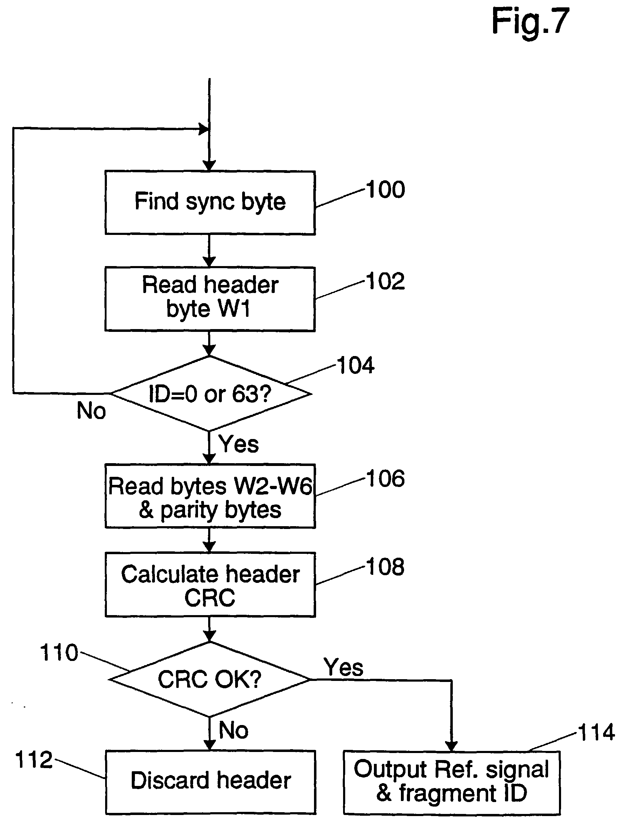

The operation of the reference signal detector 91 is shown in the flow chart of Figure 7. Referring to Figure 7, at step 100 the detector awaits occurrence of a predetermined unique bit pattern which is characteristic of a sync byte at the beginning of a Header region. Upon occurrence of this pattern, the detector advances to step 102, where the first information byte W1, containing the fragment ID, is read. At step 104 the ID is examined to establish whether the Header region belongs to either fragment 0 or fragment 63. If not, the detector returns to step 100 to await the sync byte at the start of the next fragment.

If the Header region is part of either of these fragments, the detector proceeds to read the remaining information bytes W2 to W6 and the parity bytes, at step 106. The CRC value for the Header is calculated at step 108, and tested at step 110 by comparison with the value contained in the parity bytes. If the CRC value is incorrect, the header data are discarded at step 112. Otherwise the detector outputs the reference signal detection pulse and the fragment ID to the ATF controller 92 at step 114.

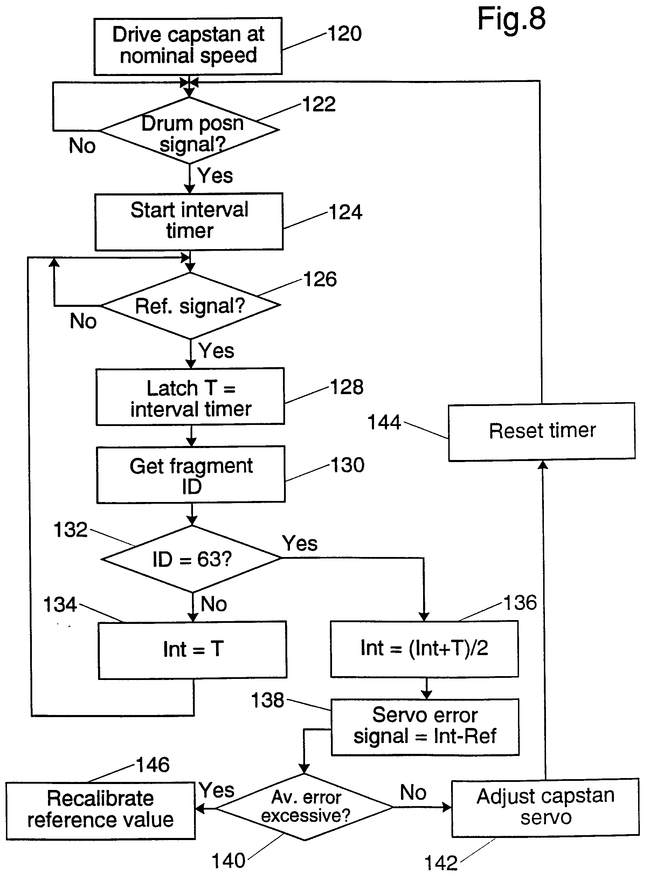

During normal operation (i.e. when a reference value for the time interval Int has been established), the ATF circuit 49 operates as shown by the flow chart of Figure 8. Referring to Figure 8, the ATF circuit (including the ATF controller 92 and the interval timer 94) normally causes the capstan servo 45 to move the tape at its nominal speed for storage and retrieval of data, as indicated at step 120. At step 122 the ATF circuit repeatedly tests for receipt of a drum position signal from the pulse generator 50, and upon occurrence of this signal it advances to step 124 where the interval timer 94 commences a timing operation. The ATF circuit now proceeds to step 126, where it again repeatedly executes a test, this time for receipt of a reference signal detection pulse from the detector 91. When this pulse occurs the procedure continues to step 128, where the ATF controller 92 latches the value T at that instant of the interval measured by the timer 94, and then to step 130 where it receives the fragment ID from the detector 91. At step 132 the controller tests whether the fragment has an ID of 63. If not (i.e. the fragment ID is 0), the procedure sets the interval Int to an initial value of T, and then returns to step 126 to await receipt of the next reference signal detection pulse which should be for the Header region of fragment 63.

If the fragment ID received at step 130 is 63, a final value for the interval Int is calculated at step 136 in accordance with the relationship

$$Int = (Int + T)/2$$

that is the mean of the values T latched by the controller 92 for each of the reference signals (Header regions) in the current track.

This value of the interval Int is used at step 138 to calculate an error feedback signal for the capstan servo 45 as the difference between Int and the reference value for this interval. The average value of this error signal (averaged for example over the previous ten tracks) is tested at step 140 to assess whether it is excessive, i.e. indicative that the capstan servo has lost lock, as can happen for example if there has been a significant change in the position of the tracks on the tape, as explained below. If the error signal is not excessive, the operation of the capstan servo 45 is adjusted at step 142 in accordance with the magnitude and sense of the error signal, in order to keep the tracks on the tape aligned with the heads, before the procedure returns to step 122 via step 144 where the interval timer 94 is reset.

This adjustment will maintain the heads HA, HB in alignment with the tracks on the tape so long as there is no excessive change in the position of the tracks on the tape. However, such changes can occur, for example at a transition between data recordings made a different times or on different machines. When such a change occurs and the discontinuity in track position is too great, the test at step 140 will determine that the error signal is excessive, in which case that procedure implements step 146 to recalibrate the reference value for the changed circumstances. This step is likewise performed when a tape is being real for the first time alter loading into the mechanism, in order to determine an initial value for the reference value, when an excessive error rate is encountered in the decoded data by the MDA processor 65, and possibly after preset time periods (e.g. every few minutes) as a precaution.

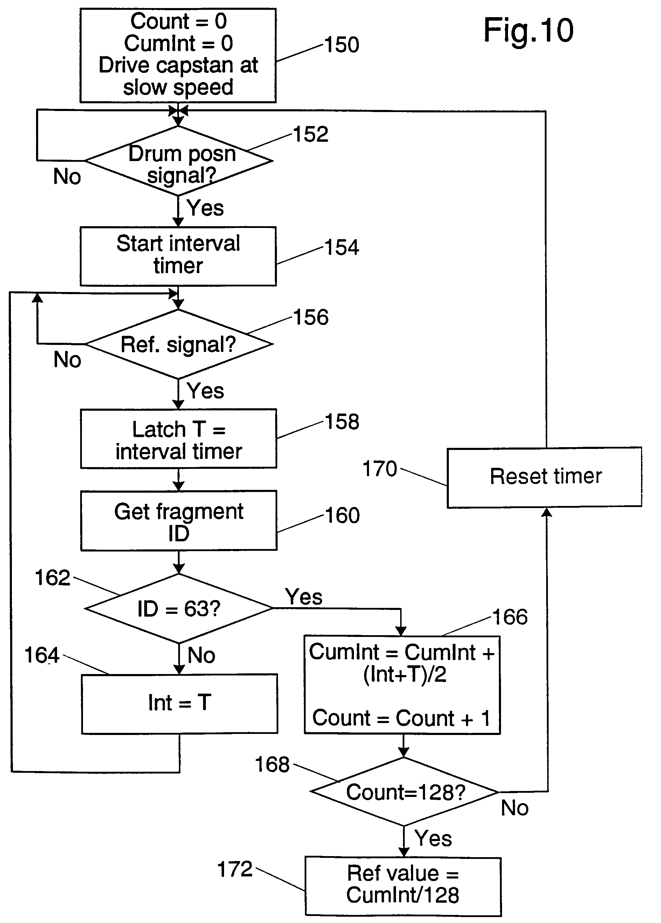

In outline step 146 involves operating the capstan servo 45 such that the tape is moved past the drum 12 at a speed different from its nominal speed during storage and retrieval of data. The time interval between occurrence of drum position signals and detection of reference signals on the tape is measured, generally as described above. However, because the tape is moving at a speed which is not essentially the normal speed, the value of this measurement will drift cyclically through all possible values between a maximum and minimum corresponding to possible extremes of misalignment between the heads HA, HB and the tracks recorded on the tape, as shown schematically in the timing diagram of Figure 9. Multiple, frequent measurements are made of the time interval throughout its range of variation, and the mean of these measurements is then calculated to determine the revised reference value. This procedure is shown in detail in Figure 10.

Referring to Figure 10, at step 150 the values of two variables Count and CumInt are set to zero, and the ATF circuit causes the capstan servo 45 to move the tape at a speed different from (typically less than) its nominal speed. The actual speed is a compromise between the time taken to detect sufficient reference signals to recalibrate the reference value, and the length of tape which passes the drum 12 before the recalibration is accomplished. The DDS format provides that storage of data will always involve writing a specified minimum number of frames in one storage operation, and it is therefore desirable for the recalibration to be accomplished before that number of frames has passed the drum. A typical value for the tape speed during recalibration is 80% of the nominal speed during storage and retrieval of data.

Steps 152 to 164 of Figure 10 are generally analogous to steps 122 to 134 of Figure 8, and therefore need not be described in detail. However, if the fragment ID received at step 160 is 63, the procedure of Figure 10 advances to step 166 where a cumulative interval is updated in the variable in the variable CumInt in accordance with the relationship

$$CumInt = CumInt + (Int + T)/2$$

that is by adding the mean of the values T latched by the controller 92 for each of the reference signals (Header regions) in the current track. The variable Count is incremented by one, and the procedure then continues to step 168 where the value of Count is compared with the total number of measurements required to accomplish recalibration; in the present example this total is 128. If this total number of measurements has not been acquired, the procedure simply returns to step 152 to await the next drum position signal, via step 170 where the interval timer 94 is reset. Otherwise the recalibrated reference value is obtained at step 172 by dividing the value of CumInt by 128 (i.e. by calculating the mean of the measurements involved in the recalibration).

The system controller 43 is arranged to note the tape position at which a recalibration of the reference value became necessary (e.g. because of a transition between different recordings). When a new reference value has been obtained (and before the old reference value is discarded), the system controller 43 requests the deck controller 52 to rewind the tape back to a point before the noted tape position. Normal reading of the tape is then resumed, initially still using the old reference value in the tracking procedure of Figure 8; when the tape reaches the previously-noted position, the new reference value is substituted for the old one, so that tracking will continue correctly beyond that position.

The recalibrated reference value is also used, in accordance with the present invention, to provide improved control of enabling and disabling of the read circuitry (e.g. the real amplifiers 59 and the formatter/separator unit 53) in synchronism with the traversal of the tape by the heads HA, HB. It is desirable to enable the read circuitry only during those periods when the heads HA, HB are expected to be traversing areas of the tape where data have actually been recorded. Referring to Figure 11, the hatched block 71 indicates schematically the nominal timing, relative to a drum position signal from the pulse generator 50, of the period when one of the heads HA, HB will traverse data. However, because of tolerances which are allowed in the DDS format definition, especially as between different tape drive mechanisms, the timing of this period may vary between an early extreme, as shown at 72, and a late extreme, as shown at 73.

Conventionally this variation has been accommodated by using a read window pulse 75 which commences at a fixed predetermined time after the drum position signal, just before the point at which a track is expected to commence in the earliest extreme case 72. The read window pulse 75 then continues until just after the point when the track would terminate in the latest extreme case 73. This arrangement suffers from two disadvantages: there will always be some portion of the fixed read window pulse during which the read circuitry will be enabled but the heads HA, HB will not be traversing an actual track, so the read circuitry could receive spurious signals; and in the event of a track being seriously mis-located, so that it either commences before the fixed start of the read window pulse 75 or terminates after the fixed end of that pulse, the read circuitry will not be enabled for the full duration of the track so some data will not be retrieved.

The present invention avoids these problems by permitting the read window pulse timing to vary. Thus the read window pulse as used in this invention, shown at 76 in Figure 11, is nominally timed, relative to the drum position signal, to commence just before the point at which a nominally-located track is expected to commence (as indicated at 71), and to terminate just after such a track would end (as also indicated at 71). The duration of the read window pulse 76 is thus only slightly longer than the actual duration of the period in which the heads HA, HB traverse a track. However, the time of commencement of the read window pulse 76 can vary. To this end, the ATF controller 92 (Figure 6) supplies the timing generator 54 with a signal indicative of the difference between the actual reference value as determined by the procedure in Figure 10, and a predetermined nominal reference value which is equal to the reference value for the case of a track located at its nominal position across the tape. The timing generator also receives the drum position signal from the pulse generator 50, and uses these two signals to provide a read window pulse, for example to the formatter/separator unit 53, which is timed to compensate for variations in the location of the tracks. In practice the timing generator 54 may provide several different read window pulses to coordinate different aspects of the data retrieval process in different parts of the read circuitry. However, these different pulses will typically be derived from and synchronised with a principal or master pulse, and it is therefore the timing of this pulse which is of interest here.

Referring again to Figure 11, the ATF controller 92 compares the predetermined nominal reference value, which is related to the time of commencement $t_n$ of a nominally-located track, with the actual reference value currently in use and therefore indicative of the actual time of commencement $t_a$ of tracks currently being read, and derives a time difference value $t_d$. This comparison may be performed explicitly, or implicitly if the reference value is defined, by inclusion of an offset, so as to have a value of zero for a nominally-located track, in which case the reference value itself will be the required value $t_d$. The value $t_d$ is supplied via the line 62 to the timing generator 54. The timing generator 54 is arranged to adjust a nominal starting time $t_{wn}$ for the read window pulse in accordance with this time difference $t_d$, to derive an actual read window pulse starting time $t_{wa}$:

$$t_{wa} = t_{wn} - t_d$$

The nominal timing $t_{wn}$ is determined in advance for the case of a nominally-located track. The timing generator then responds to occurrence of a drum position signal from the pulse generator 50 by supplying a read window pulse (shown for example at 77) commencing at a time $t_{wa}$ after the drum position signal. The particular pulse 77 shown in Figure 11 illustrates the time $t_{wa}$ for the example of a track located to occur at the earliest extreme position possible (as indicated at 72).

By limiting the duration of the read window pulse to only slightly more than the duration of the time during which the heads HA, HB traverse a data-carrying portion of a track, the opportunity for spurious signals to be received by the read circuitry is significantly reduced. In addition, the read window pulse is no longer rigidly fixed to the interval between the start of the period 72 and the end of the period 73 shown in Figure 11. Accordingly, within limits, the timing of the read window pulse 76 can vary sufficiently to accommodate tracks which are severely mis-located across the tape, outside the normal extremes provided by the format definition. Thus data can potentially be retrieved even from tapes which are significantly outside the formal specification.

Various modifications may be made to the embodiment as described above. Thus, for example, the reference signal may comprise any format of fragment or block header instead of the one shown in Figure 3, or indeed any recognizable bit pattern which is known or arranged to occur at a predictable position or positions along a track. Particular headers used may be different from the first and last in a fragment (as described above), and the system may be arranged to choose whichever headers are least affected by any temporary perturbation of the tape reading process. Fewer than 128 measurements may be made in recalibrating the reference value, possibly in the order of thirty measurements. In moving the tape at a different speed from normal for recalibration of the reference value, the tape may be moved in reverse (including at a rate which is the same magnitude as, but in the opposite direction to, the rate during normal operation). It will be noted that the procedure shown in Figure 7 for detecting reference signals will involve some time delay between passing of the reference signal area under the relevant head HA, HB and generation of the reference signal detection pulse by the detector 91. However, this delay will typically be constant, and affects both the recalibration procedure and normal operation, and thus will automatically be compensated.

## Claims

1. A method for controlling timing of operation of read circuitry in a tape drive, the drive having a rotating transducer for retrieving data recorded in tracks extending across data-carrying media, and each said track including at least one reference signal, the method comprising the steps of:

   generating a position signal at a predetermined angular position of said transducer in each revolution thereof;
   determining a reference value for a time interval between occurrence of said position signal and detection of said reference signal; and
   controlling timing of operation of the read circuitry in accordance with said reference value.

2. The method of claim 1, wherein relative motion between said media and said transducer is controlled to maintain a measured delay between occurrence of said position signal and detection of said reference signal in each revolution of said transducer in a predetermined relationship to said reference value.

3. The method of claim 1 or claim 2, wherein said timing of operation is controlled by adjusting it to differ from a predetermined nominal timing in dependence upon difference between said reference value and a predetermined nominal reference value.

4. The method of any one of the preceding claims, wherein said reference value is redetermined upon occurrence of at least one predetermined event.

5. The method of claim 4, wherein said predetermined event is occurrence of an error rate in retrieved data in excess of a predetermined threshold.

6. The method of claim 4, wherein said predetermined event is substitution of one item of media in said drive for another item of media.

7. The method of claim 4, wherein said predetermined event is occurrence of a value for said measured delay which differs by more than a predetermined amount from said reference value.

8. The method of any one of the preceding claims, wherein said reference signal comprises a predetermined data pattern occurring in data recorded in said tracks.

9. Apparatus for controlling timing of operation of read circuitry in a tape drive, the drive having a rotating transducer for retrieving data recorded in tracks extending across data-carrying media, and each said track including at least one reference signal, comprising:

   means for generating a position signal at a predetermined angular position of said transducer in each revolution thereof;
   means for determining a reference value for a time interval between occurrence of said position signal and detection of said reference signal; and
   means for controlling timing of operation of the read circuitry in accordance with said reference value.

Fig.1

Fig.2

## Fig.3

MAIN DATA AREA
(64 FRAGMENTS OF 201 BYTES)

PREAMBLE

26

27

27

27

HEADER
28

MAIN DATA
29

| 1-BYTE SYNC | 6 BYTES | | | | | | 1-BYTE PARITY | 1-BYTE PARITY |
|---|---|---|---|---|---|---|---|---|
| | W1 | W2 | W3 | W4 | W5 | W6 | | |

192 DATA AND/OR PARITY BYTES

## Fig.5

28b
21
22
Int
84
80
28a
20
82

10

POSITION OF READ HEAD
FOR DRUM POSITION SIGNAL

Fig.4

## Fig.6

CLK PLL 61

DECODER 90

REF.SIGNAL DETECT 91

53

59

12 HB

HA 50

15

CAPSTAN SERVO 45

ATF CONTROL 92

FRAGMENT ID NO.

49

Reset

INTERVAL TIMER 94

62

TIMING GENERATOR 54

## Fig.9

Interval µs

40
20
0
-20
-40

Time - s

## Fig.11

Drum posn. signal

Valid data times

$t_n$  71  Nominal

$t_a$  72  Early

$t_d$  73  Late

Fixed window  75

Variable window

$t_{wn}$  76

$t_{wa}$  77

Time

# Fig.7

```
                    ┌─────────────────┐
                    │  Find sync byte │────── 100
                    └─────────────────┘
                             │
                    ┌─────────────────┐
                    │   Read header   │────── 102
                    │    byte W1      │
                    └─────────────────┘
                             │
                          ╱────╲
                  No    ╱ ID=0 or╲ ────── 104
              ◄────────╲  63?    ╱
                        ╲────────╱
                             │ Yes
                    ┌─────────────────┐
                    │Read bytes W2-W6 │────── 106
                    │  & parity bytes │
                    └─────────────────┘
                             │
                    ┌─────────────────┐
                    │ Calculate header│────── 108
                    │      CRC        │
                    └─────────────────┘
                             │
                 110 ──   ╱──────╲      Yes
                         ╱ CRC OK? ╲ ─────────────┐
                         ╲         ╱              │
                          ╲───────╱               │
                             │ No                 │
        112 ──   ┌─────────────────┐    ┌─────────────────┐ ── 114
                 │ Discard header  │    │ Output Ref. signal│
                 └─────────────────┘    │  & fragment ID   │
                                        └─────────────────┘
```

Fig.8

Drive capstan at nominal speed — 120

Drum posn signal? — 122
No
Yes

Start interval timer — 124

Ref. signal? — 126
No
Yes

Latch T = interval timer — 128

Get fragment ID — 130

132 — ID = 63?
Yes
No

134 — Int = T

136 — Int = (Int+T)/2

144 — Reset timer

138 — Servo error signal = Int-Ref

146 — Recalibrate reference value
Yes
Av. error excessive? — 140
No
Adjust capstan servo — 142

# Fig.10

Count = 0
CumInt = 0
Drive capstan at
slow speed — 150

Drum posn signal? — 152
No / Yes

Start interval timer — 154

Ref. signal? — 156
No / Yes

Latch T = interval timer — 158

Get fragment ID — 160

ID = 63? — 162
Yes / No

Int = T — 164

CumInt = CumInt + (Int+T)/2

Count = Count + 1 — 166

Count=128? — 168
No / Yes

170 — Reset timer

Ref value = CumInt/128 — 172

European Patent
Office

**EUROPEAN SEARCH REPORT**

Application Number

EP 96 30 6932

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 720 164 A (SONY CORP) 3 July 1996 * the whole document * | 1-4,6-9 | G11B20/10 G11B20/22 G11B15/467 G11B27/11 G11B27/30 |
| X | PATENT ABSTRACTS OF JAPAN vol. 012, no. 439 (P-788), 18 November 1988 & JP 63 167477 A (PIONEER ELECTRONIC CORP), 11 July 1988, | 1,9 | |
| Y | * abstract * | 2-8 | |
| D,Y | EP 0 671 735 A (HEWLETT PACKARD LTD) 13 September 1995 * page 8, line 4 - page 9, line 40 * | 2-8 | |
| X | PATENT ABSTRACTS OF JAPAN vol. 017, no. 624 (P-1646), 17 November 1993 & JP 05 198093 A (SONY CORP), 6 August 1993, * abstract * | 1,9 | |
| X | PATENT ABSTRACTS OF JAPAN vol. 96, no. 4, 30 September 1996 & JP 08 129728 A (SONY CORP), 21 May 1996, * abstract * | 1,9 | TECHNICAL FIELDS SEARCHED (Int.Cl.6) G11B |
| A | PATENT ABSTRACTS OF JAPAN vol. 014, no. 169 (P-1032), 30 March 1990 & JP 02 024874 A (SONY CORP), 26 January 1990, * abstract * | 1,9 | |

-/--

The present search report has been drawn up for all claims

| Place of search | Date of completion of the search | Examiner |
|---|---|---|
| THE HAGUE | 7 August 1997 | Nanos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

**EUROPEAN SEARCH REPORT**

Application Number

EP 96 30 6932

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN<br>vol. 015, no. 477 (P-1283), 4 December 1991<br>& JP 03 203853 A (SONY CORP), 5 September 1991,<br>* abstract * | 1,9 | |
| A | PATENT ABSTRACTS OF JAPAN<br>vol. 014, no. 241 (E-0931), 22 May 1990<br>& JP 02 065685 A (SANYO ELECTRIC CO LTD), 6 March 1990,<br>* abstract * | 1,9 | |
| A | WO 91 07751 A (EXABYTE CORP) 30 May 1991<br>* the whole document * | 1,9 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 7 August 1997 | Nanos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                             

& : member of the same patent family, corresponding document

EPO FORM 1503 03.82 (P04C01)